# EUROPÄISCHE PATENTSCHRIFT

(11) **EP 1 097 037 B1**
(45) Veröffentlichungstag und Bekanntmachung des Hinweises auf die Patenterteilung: **04.06.2003**
(21) Anmeldenummer: 99961971.1
(22) Anmeldetag: 10.07.1999
(51) Int. Cl.: B29C 47/08, B29C 47/68

(54) **SIEBWECHSLER MIT ZUGEORDNETEM ARBEITSGERÄT**
SCREEN CHANGER WITH ASSOCIATED WORKING APPARATUS
CHANGEUR DE TAMIS AVEC EQUIPEMENT INTERCHANGEABLE ASSOCIE

(30) Priorität: 14.07.1998 DE 19831495
(43) Veröffentlichungstag der Anmeldung: 09.05.2001
(73) Patentinhaber: Kreyenborg Verwaltungen und Beteiligungen GmbH & Co. KG, 48157 Münster (DE)
(72) Erfinder: MIDDLER, Robert, D-48329 Havixbeck (DE); ANDRESS, Michael, D-48155 Münster (DE)
(74) Vertreter: Habbel, Ludwig (Lutz), Dipl.-Ing.
(86) Internationale Anmeldenummer: DE9902141
(87) Internationale Veröffentlichungsnummer: WO00003862

(56) Entgegenhaltungen:
- DE-A- 3 043 217
- US-A- 3 653 419
- US-A- 4 464 104
- US-A- 4 666 392
- US-A- 5 267 847

## Beschreibung

Die Erfindung bezieht sich auf einen Siebwechsler gemäß dem Oberbegriff des Hauptanspruches.

Im Stand der Technik sind solche Siebwechsler bekannt, wobei als Arbeitsgerät beispielsweise in Extrusionsrichtung hinter dem Siebwechsler eine Pumpe, eine Granulierdüse, eine Spinndüse, ein Anfahrventil od. dgl. Einrichtungen anschließen können oder in Extrusionsrichtung vor dem Siebwechsler ein Extruder angeordnet ist. Im Stand der Technik ist es dabei üblich, das zugeordnete Arbeitsgerät über einen Adapter an das Siebwechslergehäuse anzuschließen, wodurch der Fließweg des Schmelzstromes verlängert wird und damit die Bauweise des Gesamtgerätes und wobei zusätzlich Zusatzheizungen und Regeleinrichtungen erforderlich werden, um ein zu starkes Kühlen der Schmelze innerhalb des Adapters zu vermeiden. Der Adapter hat dabei die Aufgabe, einerseits den Anschlußflansch für den Siebwechsler zu schaffen, andererseits einteilig mit dem vorgenannten Anschlußflansch den Anschlußflansch für das Arbeitsgerät, um somit ein nachträgliches Anschließen zu ermöglichen.

Aus der gattungsbildenden DE 30 43 217 A ist eine Sieb- oder Werkzeugwechselvorrichtung für Schneckenextruder bekanntgeworden, bei der der vom Gehäuse vorstehende Anschlußring über normale Schrauben am Gehäuse festgelegt ist. Der Anschlußring trägt dann über normale Schrauben das Gehäuse des nachgeschalteten Arbeitsgerätes.

Diese Anordnung bedeutet zwingend eine Verlängerung des Gehäuses in Richtung des Arbeitsgerätes, wodurch der Fließweg des Schmelzestromes verlängert und die Gesamtbauweise des Gerätes vergrößert wird. Um die Temperatur der Schmelze trotz der Verlängerung des Fließweges konstant zu halten, sind zusätzliche Heizeinrichtungen und Regeleinrichtungen erforderlich.

Der Erfindung liegt die Aufgabe zugrunde, eine solche Anordnung zu schaffen, bei der das Arbeitsgerät in seinem Außenumfang nicht vergrößert wird, d. h. also der Anschlußring in das Gehäuse verlagert wird.

Der Erfindung liegt die Aufgabe zugrunde, den bisher üblichen Adapter zu vermeiden und eine Anordnung zu schaffen, mit der das Arbeitsgerät möglichst unmittelbar an das Gehäuse des Siebwechslers anzuschließen ist.

Diese der Erfindung zugrundeliegende Aufgabe wird durch die Lehre des Hauptanspruches gelöst.

Vorteilhafte Ausgestaltungen der Erfindung sind in den Unteransprüchen erläutert.

Mit anderen Worten ausgedrückt, wird im Gehäuse des Siebwechslers eine Ausnehmung vorgesehen, in die ein Anschlußring einsetzbar ist, wobei dieser Anschlußring innerhalb der Ausnehmung durch Klemmschrauben festgelegt wird. Der Anschlußring trägt von seiner Innenseite, also der Seite, die zum Gehäuse des Siebwechslers hin gerichtet ist, eingebrachte Befestigungsschrauben, die das Arbeitsgerät tragen und nunmehr wird das Arbeitsgerät mit dem Anschlußring in die Ausnehmung im Gehäuse des Siebwechslers eingesetzt und hier durch schräg zum Außenrand des Anschlußringes angeordnete Klemmschrauben festgelegt, wobei die Klemmschrauben unter einem Winkel α zwischen 15° und 75°, vorzugsweise 45°, in den Rand des Anschlußringes eingreifen. Der Anschlußring weist dabei einen Durchflußkanal auf, der an die Eintrittsbohrung im Arbeitsgerät und an die Austrittsbohrung im Siebwechslergehäuse angepaßt ist.

Durch diese Anordnung wird erreicht, daß gegenüber den zum Stand der Technik gehörenden Einrichtungen die Länge des Schmelzweges erheblich verringert wird, so daß damit bisher übliche Zusatzheizungen und Regelungen entfallen können.

Gemäß einem besonderen Merkmal der Erfindung ist weiterhin vorgesehen, daß der Anschlußring rund ausgebildet ist, d.h. einen runden Außenumfang aufweist, so daß dadurch eine stufenlose Richtungsstabilisierbarkeit erreicht wird.

Die im Siebwechslergehäuse vorgesehene Ausnehmung weist eine Tiefe auf, die vorzugsweise der Dicke des Anschlußringes entspricht, so daß dadurch eine kompakt bauende Einheit geschaffen wird.

Zwischen Anschlußring und Siebwechslergehäuse und zwischen Anschlußring und Gehäuse des Arbeitsgerätes sind an sich zum Stand der Technik gehörende Dichtungen eingesetzt, die in der Lage sind, die bei Extrusionseinrichtungen auftretenden Drücke von 300 bis 350 bar auch bei einer Temperatur von 300° C zu beherrschen.

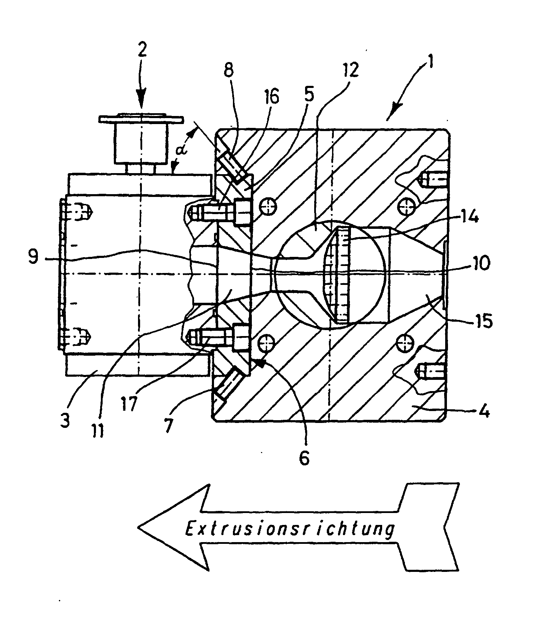

Ein Ausführungsbeispiel der Erfindung wird nachfolgend anhand der Zeichnung erläutert.

In der Zeichnung ist im Schnitt ein Siebwechslergehäuse dargestellt, an das ein Arbeitsgerät anschließt, das bei dem dargestellten Ausführungsbeispiel als Pumpe ausgebildet ist.

Ein Siebwechsler 1 weist ein Gehäuse 4 auf, in dem ein sogenannter Siebbolzen 12 mit einem Sieb 14 verstellbar angeordnet ist. Das Gehäuse 4 weist dabei eine Eintrittsbohrung 15 und eine Austrittsbohrung 10 auf, durch die ein Durchflußkanal geschaffen wird.

An das Gehäuse 4 des Siebwechslers 1 schließt ein Arbeitsgerät 2 an, das ebenfalls ein Gehäuse 3 aufweist und von diesem Arbeitsgerät 2 ist eine Eintrittsbohrung 9 für den fluidalen Kunststoffstrom erkennbar, der beispielsweise von einem Extruder durch die Eintrittsbohrung 15, durch das Sieb 14 und durch die Austrittsbohrung 10 in die Eintrittsbohrung 9 des Gehäuses geführt wird.

In dem Gehäuse 4 des Siebwechslers 1 ist eine Ausnehmung 6 vorgesehen, in die ein Anschlußring 5 eingesetzt ist, der bei dem dargestellten Ausführungsbeispiel in seiner Stärke der Stärke der Ausnehmung 6 entspricht und vorzugsweise an seinem Außenumfang rund ausgebildet ist. Dieser Anschlußring 5 weist einen Boden zur Aufnahme von Befestigungsschrauben 16 und 17 auf, mit denen er an dem Gehäuse 3 des Arbeitsgerätes 2, beispielsweise einer Pumpe, festgelegt werden kann. Dann wird das Arbeitsgerät mit dem daran angeschlossenen Anschlußring 5 in die Ausnehmung 6 eingesetzt und über Klemmschrauben 7 und 8 hier festgelegt, wobei die Klemmschrauben 7 und 8 in einem Winkel α von vorzugsweise 45° zum Außenumfang des Anschlußringes 5 ausgerichtet sind, d. h. also, den Anschlußring 5 über am Außenumfang angreifende Befestigungsmittel festlegen. Es ist erkennbar, daß durch diese Anordnung der Anschlußring 5 gedreht werden kann, d. h. eine Richtung stabilisierende Befestigung des Arbeitsgerätes 2 ist bei dieser Ausführungsform problemlos möglich.

In der Zeichnung erkennbar und zum allgemeinen Stand der Technik gehörend sind Dichteinrichtungen wie entsprechende runde Dichtungen, die in der Lage sind, den Arbeitsdruck von 300 bis 350 bar bei einer Temperatur von 300° C problemlos zu bewältigen.

## Patentansprüche

1. Siebwechsler (1) mit in Fließrichtung eines fluidalen Kunststoffstromes vorgesetztem oder nachgeschaltetem Arbeitsgerät (2), dessen Gehäuse (3) flüssigkeitsdicht an das Gehäuse (4) des Siebwechslers (1) angeschlossen ist, mit einem flanschartigen Anschlußring (5), der in eine der Größe des Anschlußringes (5) angepaßte Bohrung (6) im Gehäuse (4) des Siebwechslers (1) flüssigkeitsdicht einsetzbar ist und der einen der Eintrittsbohrung (9) im Arbeitsgerät (2) und der Austrittsbohrung (6) im Siebwechsler (1) angepaßten Durchflußkanal (11) aufweist, wobei an den Anschlußring (5) an der dem Gehäuse (4) des Siebwechslers abgewandten Seite flüssigkeitsdicht das Arbeitsgerät (2) anschließt, **dadurch gekennzeichnet, daß** der Anschlußring (5) durch Klemmschrauben (7, 8) im Gehäuse (4) des Siebwechslers (1) festlegbar ist, wobei die Klemmschrauben (7, 8) unter einem Winkel (α) in den Rand des Anschlußringes (5) eingreifen.

2. Siebwechsler nach Anspruch 1, **dadurch gekennzeichnet, daß** der Anschlußring (5) einen runden Außenumfang aufweist.

3. Siebwechsler nach Anspruch 1 oder 2, **dadurch gekennzeichnet, daß** die Ausnehmung (6) der Stärke des Anschlußringes (5) entspricht.

## Claims

1. Screen changer (1) with a working apparatus (2) located before or behind it in the direction of flow of a stream of fluid plastic, the housing (3) of which working apparatus is connected fluidtightly to the housing (4) of the screen changer (1) with a flange-shaped connecting ring (5) which can be inserted fluidtightly in a hole (6) in the housing (4) of the screen changer (1) which hole is adapted to the size of the connecting ring (5) and which connecting ring (5) incorporates a duct (11) adapted to the inlet hole (9) in the working apparatus (2) and the outlet hole (6) in the screen changer (1), where the working apparatus (2) is connected fluidtightly to the connecting ring (5) on the side facing away from the housing (4) of the screen changer, **characterised in that** the connecting ring (5) can be fixed in position with clamping screws (7, 8) in the housing (4) of the screen changer (1), where the clamping screws (7, 8) engage with the edge of the connecting ring (5) at an angle (α).

2. Screen changer in accordance with claim 1, **characterised in that** the connecting ring (5) has a circular outer circumference.

3. Screen changer in accordance with claim 1 or 2, **characterised in that** the recess (6) corresponds to the thickness of the connecting ring (5).

## Revendications

1. Changeur de tamis (1) comprenant un outillage (2) placé en amont ou en aval dans le sens de l'écoulement d'un courant de matière plastique et dont le corps (3) est raccordé à joint étanche au corps (4) du changeur de tamis (1), et une bague de raccordement (5) du type bride qui peut être emboîtée à joint étanche aux fluides dans un perçage (6) ménagé dans le corps (4) du changeur de tamis (1) et adapté à la dimension de la bague de raccordement (5) et qui présente un conduit de passage (11) adapté au perçage d'entrée (9) de l'outillage (2) et au perçage de sortie (6) du changeur de tamis (1), l'outillage (2) se raccordant à joint étanche aux fluides à la bague de raccordement (5) sur le côté qui est éloigné du boîtier (4) du changeur de tamis, **caractérisé en ce que** la bague de raccordement (5) peut être fixée dans le corps (4) du changeur de tamis (1) par des vis de serrage (7, 8), les vis de serrage (7, 8) étant engagées dans le bord de la bague de raccordement (5) en formant un angle (α).

2. Changeur de tamis selon la revendication 1, **caractérisé en ce que** la bague de raccordement (5) présente une périphérie extérieure ronde.

3. Changeur de tamis selon la revendication 1 ou 2, **caractérisé en ce que** l'évidement (6) correspond à l'épaisseur de la bague de raccordement (5).
